# EUROPEAN PATENT APPLICATION

(11) **EP 3 521 205 A1**
(43) Date of publication of application: **07.08.2019**
(21) Application number: 19155490.6
(22) Date of filing: 05.02.2019
(51) Int. Cl.: B65D 85/36, A47J 43/20, A21B 3/13, B31B 50/28, B31B 50/44, B65D 5/24

(54) **CONTAINER FOR CAKES AND BAKED GOODS AND MOLD FOR THE MANUFACTURE THEREOF**

(30) Priority: 05.02.2018 ES 201830148 U
(71) Applicant: David Recio, S.L., 02630 La Roda (Albacete) (ES)
(72) Inventor: RECIO DE LA MORENA, Victoriano, 02630 LA RODA (Albacete) (ES)
(74) Representative: Ungria López, Javier

(57) **Abstract**

The container comprises a laminar structure made of paper or cardboard formed by a one-piece single part including a frustoconical hollow central body (1a); an annular bottom (1b) arranged around the hollow central body (1a); and a frustoconical outer wall (1c) arranged around the annular bottom; where this configuration of the container defines an annular space demarcated by the annular bottom, the frustoconical outer wall and an internal side wall (16) that is part of the hollow central body. The mold comprises a die (2) including an annular element (3), a male element (4) and a female element (5); where these three elements are aligned in one and the same axial direction (6); and where the male element (4) and the female element (5) are configured for moving in said axial direction during the shaping of each of the containers.

## Description

### Object of the invention

The present invention relates to a container for cakes and baked goods and a mold for the manufacture thereof; where the container is obtained from a laminar body made of paper or cardboard material; where the mold comprises several devices for manufacturing each of the containers from the laminar body; and where the obtained container comprises a number of radial folds converging towards a central zone of the container providing stiffness and consistency to each of the containers.

### Technical problem to be resolved and background of the invention

Different containers are known today, among which disposable containers manufactured with paper or cardboard laminar material stand out and are intended for containing different products, such as doughs for cakes and baked goods, such as muffins, for example, such that said containers constitute an enveloping support for the product until it is consumed.

These containers comprise a hollow frustoconical configuration formed by a base and a side wall including a series of folds.

Other containers manufactured with a stiff material are also known, among which those demarcating an inner annular space stand out; where said containers are used, for example, to obtain annular edible products, such as baked goods and pastries, including cakes.

These containers made of a stiff material can be used successive times, such that said containers are not disposable, and furthermore, once the corresponding cake is obtained, it is removed from the inner space of the container to enable using it again.

Obtaining containers made of paper and cardboard for obtaining annular edible products (cakes) currently presents manufacturing difficulties, particularly in the sense that it is difficult to maintain a minimal stiffness and consistency of the containers once they are obtained.

### Description of the invention

For the purpose of achieving objectives and avoiding the drawbacks mentioned in the preceding sections, the invention proposes a container for cakes and baked goods and a mold for the manufacture thereof.

The container comprises a laminar structure made of paper or cardboard formed by a one-piece single part including a frustoconical hollow central body; an annular bottom arranged around the frustoconical hollow central body; and a frustoconical outer wall arranged around the annular bottom; where this configuration of the container defines an annular space demarcated by the annular bottom, the frustoconical outer wall and an internal side wall that is part of the hollow central body.

All the parts of the laminar structure of the container, with the exception of a smaller base of the frustoconical hollow central body, include radial folds converging towards a central zone of the container; where each of said radial folds comprises overlapping laminar portions.

The smaller base of the frustoconical hollow central body of the container is arranged in correspondence with an opening of the container which provides access to the annular space of said container.

The mold for manufacturing the container for cakes and baked goods comprises a die including an annular element, a male element and a female element; where these three elements are aligned in one and the same axial direction; and where the male element and the female element are configured for moving in said axial direction during the shaping of each of the containers made of paper or cardboard.

The male element is facing a frustoconical internal hollow space of the annular element; where said frustoconical internal hollow space has a larger passage section than the section of the male element.

The male element comprises a first frustoconical projecting body, and the female element comprises a frustoconical cavity which is configured for introducing therein the first projecting body of the male element.

The mold further comprises a pressing device including two opposing annular plates which have toothed opposite faces; where said annular plates are configured for pressing on two opposite surfaces of part of the container during shaping.

The male element comprises the first frustoconical projecting body and a second cylindrical-shaped body; where the first frustoconical projecting body is attached by its larger base to one of the bases of the second body; and where an annular area surrounding the larger base of the first frustoconical projecting body of the male element is configured in said base of the second body.

The annular area of the second body of the male element is facing a flat annular area surrounding a larger base of the frustoconical cavity of the female element. The frustoconical internal hollow space of the annular element is demarcated by an inclined generating internal side face diverging towards the female element. Next, to help better understand this specification and as an integral part thereof, a series of figures is attached in which the object of the invention is depicted in an illustrative and non-limiting manner.

### Brief description of the figures

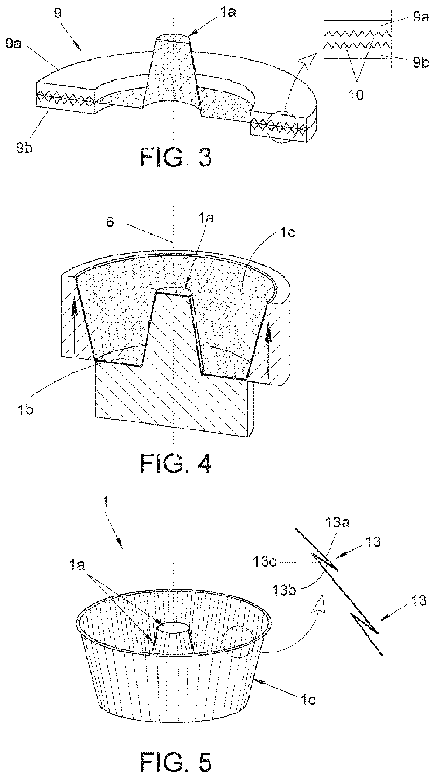

**Figures 1 to 4****.-** show perspective views of the mold for manufacturing containers for cakes and baked goods, where the different phases of the method for the manufacturing each of the containers which are made of paper or cardboard material are furthermore shown.
**Figure 5****.-** shows a perspective view of the container obtained with the mold.

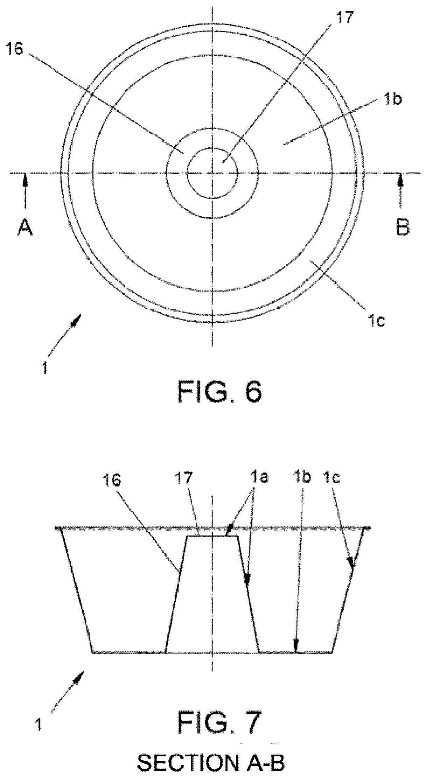

**Figure 6****.-** shows a plan view of the container.
**Figure 7****.-** shows a section view of the container according to section A-B of Figure 6.

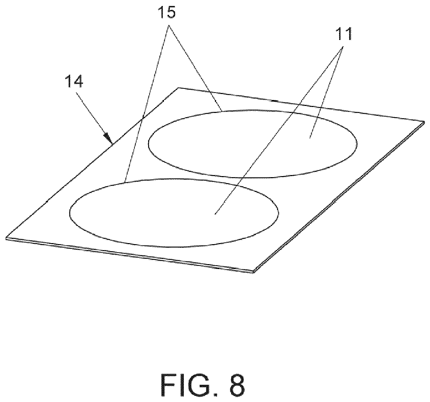

**Figure 8****.-** shows a perspective view of a laminar strip from which laminar bodies are removed by blanking to shape the containers with the mold.

### Description of an embodiment of the invention

Considering the number used in the figures, the mold for manufacturing containers 1 for cakes and baked goods comprises a die 2 including an annular element 3, a male element 4 and a female element 5; where these three elements 3, 4, 5 are aligned in one and the same axial direction 6; and where the male element 4 and the female element 5 are configured for moving in said axial direction 6 towards the female element 5 during the shaping of each of the containers 1 comprising a laminar structure made of paper or cardboard material.

The male element 4 comprises a first frustoconical projecting body 4a and a second cylindrical-shaped body 4b; where the first frustoconical projecting body 4a is attached by its larger base to one of the bases of the second cylindrical-shaped body 4b; and where an annular area 7 demarcating the larger base of the first frustoconical projecting body 4a is configured in said base of the second body 4b.

The annular element 3 comprises a frustoconical internal hollow space demarcated by an inclined generating internal side face 8 diverging towards the female element 5.

The female element 5 comprises a frustoconical cavity 5a and a flat annular area 5b surrounding a larger base of the frustoconical cavity 5a.

The mold for manufacturing containers further comprises a pressing device 9 including two opposing annular plates 9a, 9b which have toothed opposite faces 10; where said annular plates 9a, 9b are configured for pressing on two opposite surfaces of part of the container 1 in one of the phases for the shaping thereof.

Each container 1 comprises a laminar structure formed by a frustoconical hollow central body 1a corresponding with the first body 4a of the male element 4; an annular bottom 1b corresponding with the annular area 7 of the second body 4b of the male element 4; and a frustoconical outer wall 1c which corresponds with the internal side face 8 of the annular element 3; where this configuration of the container 1 demarcates an annular space in which dough for food product, such as a dough for cakes or muffins, for example, is poured.

The annular space of the container 1 is demarcated by the annular bottom 1b, the frustoconical outer wall 1c and an internal side wall 16 that is part of the hollow central body 1a.

On the other hand, all the parts of the laminar structure of the container 1, with the exception of a smaller base 17 of the frustoconical hollow central body 1a, include radial folds 13 converging towards a central zone of the container 1; where said smaller base 17 of the frustoconical hollow central body 1a is arranged in correspondence with an opening of the container 1 which provides access to the annular space of said container 1.

It should be pointed out that each of the radial folds 13 comprises three overlapping laminar portions (13a, 13b, 13c).

Each of the containers 1 is obtained from a laminar body 11 which is placed in an intermediate zone 12 demarcated between the female element 5 and the male element 4 and annular element 3 assembly.

In this situation, in a first phase the male element 2 is moved towards the female element 5 in the axial direction 6 until the first frustoconical projecting body 4a of the male element 2 is fitted in the frustoconical cavity 5a of the female element 5; where in this first phase the laminar body 11 is dragged by the male element 2, shaping the frustoconical hollow central body 1a of the container 1 located between the male element 2 and the female element 5; where in this first phase a central part of the laminar body 11 is drawn into the frustoconical cavity 5a of the female element 5.

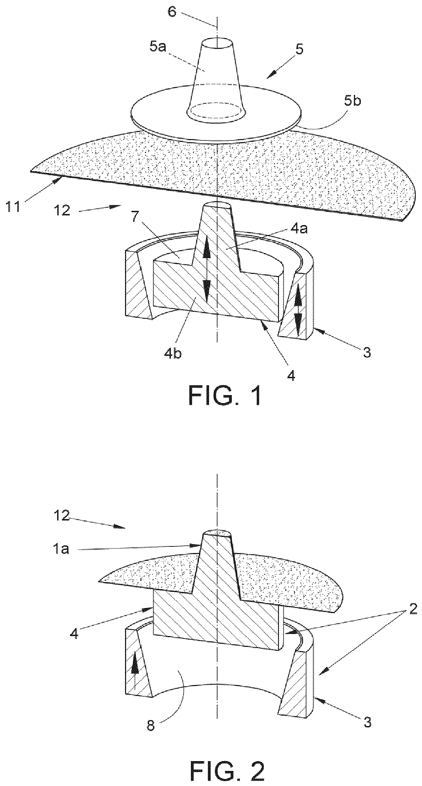

Furthermore, in this first phase, a flat part of the container 1 being formed surrounds a larger base of the cavity demarcated by the hollow frustoconical body 1a of the container 1; where said flat part of the container 1 is located between the flat annular area 5b of the female element 5 and the annular area 7 of the male element 4; all of this being shown in Figure 2.

In a second phase after the first phase in which the central hollow body 1a of the container 1 has already been shaped, opposing pressure is applied on perimeter areas of the two opposite faces of the flat part of the container 1 being formed by means of the pressing device 9. The operation of this second phase is performed maintaining the advanced positioning of the male element 4 where its first body 4a is fitted inside the frustoconical cavity 5a of the female element 5, and where the opposing pressure applied on the flat part of the container 1 between the annular area 7 of the male element 4 and the flat annular area 5b of the female element 5 is maintained.

The pressing device 9 is connected to an articulated arm not depicted in the figures, where once the pressing has been performed, said pressing device 9 is withdrawn to a standby position so as not to interrupt other phases for shaping the container 1; furthermore, prior to the pressing operation, the pressing device 9 is located, by means of the articulated arm, in the active position to enable pressing the flat part of the container 1 being formed.

In a third phase for shaping the container 1, the annular element 3 of the die 2 is moved in the axial direction 6 towards the flat part of the container 1 being formed; where during this third phase shaping of the container 1 is completed, with the annular bottom 1b and also the frustoconical outer wall 1c being configured. The operation of this third phase is also performed also maintaining the advanced positioning of the male element 4 where its first body 4a is fitted inside the frustoconical cavity 5a of the female element 5.

During shaping of the container 1, the radial folds 13 are formed, converging towards a central zone of the container 1; where said radial folds 13 help to stiffen and maintain the consistency of said container 1.

On the other hand, each of the laminar bodies 11 can be obtained, for example, from a roll 14 of paper as shown in Figure 1; where the laminar bodies 11 are separated from the roll of paper 14 by means of blanking 15; such that each laminar body 11, once separated from the roll of paper 14, is placed, in a phase prior to the first phase, between the female element 5 and the male element 4 and annular element 3 assembly.

The mold of the invention includes a roller device to which the roll 14 of paper or cardboard is coupled and a device for pulling said roll 14 to unwind it from the roller in the precise measurement to enable separating the laminar bodies 11 by means of blanking 15; where each of the knocked-out laminar bodies 11 is centered in the die 2 which, in a first movement, draws a central part of the laminar body 11 into the frustoconical cavity 5a of the female element 5 to shape the hollow central body 1a of the container 1, as described above.

## Claims

1. **Container for cakes and baked goods**, **characterized in that** it comprises a laminar structure made of paper or cardboard formed by a one-piece single part including a frustoconical hollow central body (1a); an annular bottom (1b) arranged around the frustoconical hollow central body (1a); and a frustoconical outer wall (1c) arranged around the annular bottom (1b); where this configuration of the container (1) defines an annular space demarcated by the annular bottom (1b), the frustoconical outer wall (1c) and an internal side wall (16) that is part of the hollow central body (1a).

2. **Container for cakes and baked goods** according to claim 1, **characterized in that** all the parts of the laminar structure of the container (1), with the exception of a smaller base (17) of the frustoconical hollow central body (1a), include radial folds (13) converging towards a central zone of the container (1); where said radial folds (13) comprise overlapping laminar portions (13a, 13b, 13c).

3. **Mold for manufacturing the container for cakes and baked goods** described in one of the preceding claims, **characterized in that**:
- it comprises a die (2) including an annular element (3), a male element (4) and a female element (5); where these three elements (3, 4, 5) are aligned in one and the same axial direction (6); and where the male element (4) and the female element (5) are configured for moving in said axial direction (6) during the shaping of each of the containers (1) made of paper or cardboard;
- the male element (4) is facing a frustoconical internal hollow space of the annular element (3); where said frustoconical internal hollow space has a larger passage section than the section of the male element (4);
- the male element (4) comprises a first frustoconical projecting body (4a), and the female element (5) comprises a frustoconical cavity (5a) which is configured for introducing therein the first projecting body 4a of the male element (4);
- it further comprises a pressing device (9) including two opposing annular plates (9a, 9b) which have toothed opposite faces (10); where said annular plates (9a, 9b) are configured for pressing on two opposite surfaces of part of the container (1) during shaping.

4. **Mold for manufacturing the container for cakes and baked goods** according to claim 3, **characterized in that**:
- the male element (4) comprises the first frustoconical projecting body (4a) and a second cylindrical-shaped body (4b);
- the first frustoconical projecting body (4a) is attached by its larger base to one of the bases of the second body (4b); where an annular area (7) surrounding the larger base of the first frustoconical projecting body (4a) of the male element (4) is configured in said base of the second body (4b);
- the annular area (7) of the second body 4b of the male element (4) is facing a flat annular area (5b) surrounding a larger base of the frustoconical cavity (5a) of the female element (5).

5. **Mold for manufacturing the container for cakes and baked goods** according to any one of the preceding claims 3 or 4, **characterized in that** the frustoconical internal hollow space of the annular element (3) is demarcated by an inclined generating internal side face (8) diverging towards the female element (5).
